# EUROPEAN PATENT APPLICATION

(11) **EP 1 655 061 A1**
(43) Date of publication of application: **10.05.2006**
(21) Application number: 05256846.6
(22) Date of filing: 04.11.2005
(51) Int. Cl.: A63F 13/12

(54) **Operating program of multiple match-up type network game**

(30) Priority: 05.11.2004 CN 200410092238
(71) Applicant: Kabushiki Kaisha G-mode, Tokyo (JP)
(72) Inventor: Miyaji, Takeshi, c/o Classa Hatsudai 802/1-44-10, Tokyo (JP)
(74) Representative: Butler, Michael John

(57) **Abstract**

To provide a "multiple games/one-to-one" type and a "multiple games/one-to-many" type match-up type network games reducing communication costs and packet costs when transmitting game data, and further realizing matching with a desired match-up opponent. An operating program of a multiple match-up type network game which operates a server terminal performing a processing of the game based on data transmitted by a client terminal, in which a processing of transmitting and giving multiple game stages to the client terminal by receiving data for requesting a game, a processing of choosing and deciding a match-up opponent corresponding to an opponent condition by each game stage based on data of the opponent condition transmitted by the client terminal, and a processing of updating and reflecting screens at respective game stages based on game data by observing match-up games at respective game stages and receiving game data executed at the client terminal and player terminals which belong to match-up opponents are made to be executed.

## Description

The present invention relates to an operating program of a multiple match-up type network game which is performed through communication networks such as an internet or a carrier network managed by a carrier. In the operating program according to the invention, a communication between a server terminal and a client terminal, or between a server terminal and a player terminal has two cases, of one in which the client terminal or the player terminal actively makes an access to the server terminal to get information and the other in which the server terminal actively provides information to the client terminal or the player terminal by transmitting game data.

Conventionally, a so-called "one game/one-to-one" type match-up game in which a client plays against a single player on one game stage, and a so-called "one game/one-to-many" type match-up game in which a client plays against multiple players on one game stage have been already developed, however, a so-called "multiple games/one-to-one" type match-up game in which a client plays against a single player on multiple game stages, and a so-called "multiple games/one-to-many" type match-up game do not exist at present.

It goes without saying that the multiple games in which a client plays against a single player can be given in accordance with multiple requests, a method of giving games in the "multiple games/one-to-one" type match-up game and "multiple games/one-to-many" type match-up game according to the invention is completely different from a method of the above.

In the conventional "one game/one-to-one" type match-up game, for example, in a case of the "shogi (Japanese chess)" game, there is a problem that a client has to wait for a long time until one game ends because the game does not proceed until an opponent player does not move even when the client moves. And in the conventional "one game/one-to-many" type match-up game, for example, in a car race game, there is a problem inversely with the above that a skilled hand rapidly proceeds with the game and a poor hand cannot enjoy the game because the game ends almost without doing anything.

The invention, at least in its preferred embodiments, will solve the above problems and an object thereof is to provide an operating program of a multiple match-up type game in which a player can play the game at his/her pace and also can enjoy the game fully regardless of a proceeding speed or a skill of an opponent player in the game.

In addition, in the network game, there exists a problem that communication costs and packets costs mount up in the case that proceeding speed of the opponent player is low because the terminal is in a state of continuous connection to the network during the match-up game, however, the invention also has another object of providing an operating program of the multiple match-up type network game which can suppress such a cost burden.

Furthermore, the invention at least in its preferred embodiments, also has the other object of providing an operating program of the multiple match-up type network game which can selects a match-up opponent so as not to select one who plays at another game stage when choosing the opponent because multiple game stages are given in the invention.

Viewed from a first aspect, the invention provides an operating program of a multiple match-up type network game which operates a server terminal capable of transmitting and receiving game data to and from a client terminal playing a game through a network, and performing a processing of the game based on data transmitted by the client terminal, in which a processing of transmitting and giving multiple game stages to the client terminal by receiving data for requesting a game from the client terminal, a processing of choosing and deciding a match-up opponent corresponding to an opponent condition by each game stage based on data of the opponent condition transmitted by the client terminal, and a processing of updating and reflecting screens at respective game stages based on game data by observing match-up games at respective game stages and receiving game data executed at the client terminal and player terminals which belong to match-up opponents are made to be executed.

Viewed from a second aspect, in addition to the first aspect of the invention, the multiple game stages are the multiple game stages whose contents are for the same kind of game.

Viewed from a third aspect, in addition the first aspect of the invention, the multiple game stage are the multiple game stages whose contents are for different kinds of games.

Viewed from a fourth aspect, in addition to the first, second or third aspects of the invention, the process of updating and reflecting screens at respective game stages includes a process of prompting for a choice whether game data received from the client terminal is made to be batch game data executed at multiple game stages or not.

Viewed from a fifth aspect, in addition to any of the preceding aspects, the opponent condition includes as a possible choice at least one of a free match-up not specifying the opponent, a friend match-up specifying the opponent and a level designation considering the ability of the opponent.

Viewed from a sixth aspect in addition to the fifth aspect of the invention, in the case of the free match-up, the processing of choosing and deciding the match-up opponent includes a processing of sorting out the match-up opponents so that the same match-up opponent is not selected redundantly by publishing and notifying a match-up reception with respect to unspecified persons and by checking the match-up opponents playing at other game stages.

Viewed from a seventh aspect, in addition to the fifth aspect of the invention, in the case of the friend match-up, the processing of choosing and deciding the match-up opponent includes a processing of searching and specifying a friend to be the match-up opponent from plural friends so that the same match-up opponent is not selected redundantly by checking the match-up opponents playing at other game stages and notifying a match-up request to a player terminal which belongs to the specified match-up opponent.

Viewed from an eighth aspect, in addition to the fifth, sixth or seventh aspects, in the case of the level designation, the processing of choosing and deciding the match-up opponent includes a processing of searching and specifying the match-up opponent corresponding to the designated level so that the same match-up opponent is not selected redundantly by checking the match-up opponents playing at other game stages and of notifying a match-up request to a player terminal which belongs to the specified match-up opponent.

Viewed from a ninth aspect, in addition to the fifth aspect of the invention, in the case of combination of the free match-up and the level designation, the processing of choosing and deciding the match-up opponent includes a processing of sorting out the match-up opponents so that the same match-up opponent is not selected redundantly by publishing and notifying a match-up reception with respect to unspecified persons and by checking the match-up opponents playing at other game stages, and of checking whether the unspecified person to be the match-up opponent is in a designated level.

By applying a configuration of the first aspect of the invention, multiple games are allowed to proceed simultaneously, therefore, one can enjoy the game without bothering about proceeding speed or a level of skill of an opponent player in the game.

Also, by applying a configuration of the second aspect of the invention, for example, in the case of a match game such as "shogi" or "go", the same kind of game can be played with a variety of players, therefore, one can recognize his/her own ability, and because of the same kind of game, a league match in a tournament style can be also executed.

Also, by applying a configuration of the third aspect of the invention, for example, in cases of "shogi", "go", and "car face", "shogi" and "go" are static, whereas "car race" is dynamic, therefore, a variety of games can be fully enjoyed without weariness.

Also, by applying a configuration of the fourth aspect of the invention, for example, in a case of the match game such as "shogi" , there is usually a problem that communication costs and packet costs mount up when game data are transmitted by each game stage because of a state of a continuous network connection, however, since game data in multiple game stages can be transmitted together, communication costs and packet costs do not mount up even in the case that a next move requires a long time.

Also, by applying a configuration of the fifth aspect of the invention, one can play the match-up game according to one's preference such as the match-up with a complete stranger, the match-up with a good friend, or an opponent player matching with a one's level.

Further, by applying a configuration of the sixth aspect of the invention, it can be avoided that someone playing at another game stage is selected as a match-up opponent redundantly, and a match-up reception is openly notified, therefore, the next match-up opponent can be searched widely and rapidly.

Further, by applying a configuration of the seventh aspect of the invention, it can be avoided that a friend playing at another game stage is selected as a match-up opponent redundantly, and a match-up request is notified to a player terminal which belongs to the friend to be the match-up opponent, therefore, the game can be started timely.

Further, by applying a configuration of the eighth aspect of the invention, it can be avoided that a match-up opponent playing at another game stage is selected redundantly, and the match-up request is notified to the player terminal which belongs to the selected match-up opponent, the game can be started timely.

Further, by applying a configuration of the ninth aspect of the invention, it can be avoided that a match-up opponent playing at another game stage is selected redundantly, and the match-up game can be certainly executed with an unspecified person in a desired level.

Preferred embodiments of the invention will now be described by way of example only and with reference to the accompanying drawings in which:
Fig. 1 is a schematic chart showing an operating content of an operating program according to the invention;
Fig. 2 is a configuration view of a system suitable for carrying out the invention;
Fig. 3 is an initial page notified to a client terminal;
Fig. 4 is a page displayed when "match list" was selected in Fig. 3 or when an opponent was decided;
Fig. 5 is a page displayed when "unregistered" was selected in Fig. 4;
Fig. 6 is a page displayed when "free match-up" was selected in Fig. 5;
Fig. 7 is a page notifying a registration for the match-up opponent;
Fig. 8 is a page in which menus for a next stage are displayed during the game;
Fig. 9 is a page displayed when "transmit" was selected in Fig. 8 or "transmit together" was selected in Fig. 10;
Fig. 10 is a page which can be called after multiple games proceeded in Fig. 4;
Fig. 11 is a page allowed to be displayed when "transmit together" was selected in Fig. 10;
Fig. 12 is a page which can be called in a state that a player terminal has moved and a client terminal has a turn during the game and also the page for proceeding to a next state (board face);
Fig. 13 is a selection page of messages to be sent to the match-up opponent when selecting "resign" in Fig. 12;
Fig. 14 is a selection page of messages to be sent to the match-up opponent during the game; and
Fig. 15 is a page displayed when the game ends.

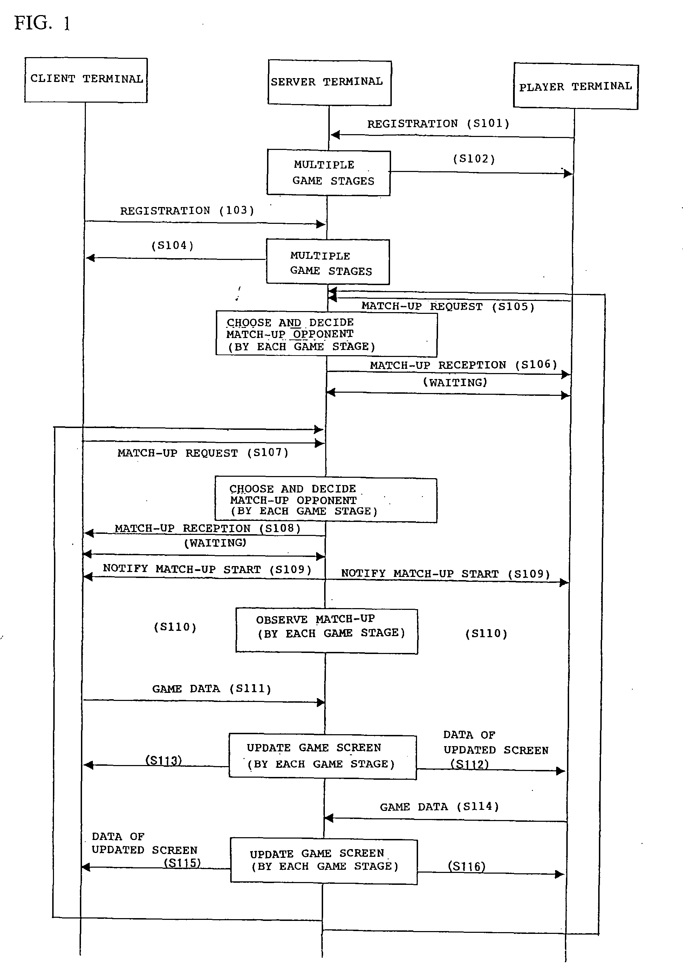

Fig. 1 is a flow chart showing an operating content of an operating program according to the invention. The invention is the operating program of a multiple match-up type network game for operating a server terminal, and Fig. 1 shows a flow of processing in a server terminal side from a transmission and giving of game stages to a client terminal to an end of the game in time series. In an embodiment of Fig. 1, users who have been registered as members can participate in a match-up game, therefore, every match-up opponent having a player terminal has performed a user registration to a server terminal (S101) and has already received multiple game stages from the server terminal (S102).

Under the above circumstance, when a person having a client terminal desires to play a match-up game, first, it is required that he/she performs the user registration between the client terminal and the server terminal (S103). After the user registration has been completed, processing of transmitting and giving multiple game stages to the client terminal is performed in the server terminal (S104). Accordingly, in the embodiment of the invention, in a stage that client terminal receives multiple game stages from the server terminal, the player terminal is already in an environment in which the same multiple game stages have been given, and one of the characteristics of the invention is that the multiple game stages are given by the user registration.

The game stages to be given have two cases of the same kind of game and of different kinds of games, and it can be possible to choose the case at the client terminal side. In the case, a processing that prompts the client terminal to choose either of them by the server terminal is included. In the case of different kinds of games, it is also possible that desired games are chosen from various kinds of games and the corresponding multiple game stages are transmitted and given.

Under the above circumstance, when an opponent request as a condition required of the match-up opponent is notified by the player terminal (S105), the server terminal performs a processing of transmitting a match-up reception indicating the reception of the opponent request to the player terminal (S106), and waits until a match-up opponent who satisfies the condition makes an application for the match-up.

Next, when an opponent request as a condition required of the match-up opponent is notified by the client terminal (S107), the server terminal performs a processing of transmitting the match-up reception indicating the reception of the opponent request to the client terminal (S108), and waits until an opponent who satisfies the condition makes an application for the match-up.

Then, when the opponent request notified by the player terminal matches the opponent request notified by the client terminal, the server terminal decides the match-up opponents and makes a notification of starting the match-up to the client terminal and the player terminal respectively (S109). The "opponent request" in the drawing corresponds to an "opponent condition" as referred to in the invention, including at least one of a free match-up not specifying the match-up opponent, a friend match-up specifying the opponent and a level designation designating the ability of the match-up opponent as a choice content, and it can be possible to combine the free match with the level designation, for example.

In the embodiment shown here, in the case of the friend match-up, plural friends have previously been registered in a database of the server terminal, and in the case of the level designation, plural users in respective levels have previously been registered in the database of the server terminal, a friend or a user to be the match-up opponent is searched and specified among them. There are the free match-up, the friend match-up and the level designation as separate opponent conditions, for example, in the case that notifications for receiving the match-up from plural unspecified persons registered as users, the free match-up and the level designation are allowed to be the united opponent condition by sorting opponents so that only the unspecified person of the desired level is chosen as the opponent, or the friend match-up and the level designation are allowed to be the united opponent condition by making plural registered friends to be data by each level, retrieving and specifying the match-up opponent among them.

In the friend match-up of the embodiment, users who have previously recognized each other's ID are regarded as friends, therefore, it is necessary to register the ID of oneself in the server terminal as a friend in the stage of notifying the opponent request as the condition for the opponent from the player terminal (S105), and in the stage of notifying the opponent request as the condition for the opponent from the client terminal (S107).

In every case of the free match-up, friend match-up and the level designation, the server terminal checks the opponents who are playing in other game stages and performs a processing of sorting the opponents so that the same person is not chosen as the match-up opponent.

Accordingly, one of the characteristics of the applied invention is that the server terminal chooses and decides the match-up opponent at every game stage by checking whether the request condition matches the request condition of the opponent chosen by the player terminal when the request condition for the opponent is notified by the client terminal under a state that there are player terminals who have previously chosen the opponent and waited, and by checking whether the opponent overlaps with the one who is playing at another game stage.

When the match-up game is started, the server terminal continuously observes the status of the match-up (S110). Supposing that the client terminal is the first move, when the client terminal transmits game data first (S111), the server terminal performs a processing of updating the corresponding game screen based on the game data (S112, S113). When the client terminal transmits game data, whether only the game data which has been proceeded with just now is transmitted or whether the game data which have been proceeded with in other multiple game stages are transmitted together can be selected by the client terminal side. In the server terminal side, a processing corresponding to the selection is executed.

Similarly, when the player terminal as the second move transmits game data to the server terminal after that (S114), the server terminal performs a processing of updating the game screen based on the game data (S115, S116), and a processing of inquiring the selection whether the game data in other multiple game stages are transmitted together is performed when transmitting the game data.

As described above, in the applied invention, the processing of the selection whether the batch transmission is executed or not is performed when the client terminal and the player terminal transmits the game data, and by selecting the batch transmission, communication costs and packets costs can be significantly reduced as compared with the case that the game data is transmitted separately by each game stage, which is one of the characteristics of the applied invention.

Accordingly, the transmissions of game data are sequentially performed by the client terminal and the player terminal repeatedly, and when the game ends at last, the server terminal performs once again the processing of choosing and deciding the opponent in accordance with the opponent request received from the client terminal with respect to each game stage at which the game has finished. When the game has finished, the match-up in the game stage at which the game is finished is not started again unless the friend match-up or the level designation for specifying the opponent is selected as the opponent condition by the client terminal, therefore, it can be possible that a processing of publishing and notifying the match-up reception continuously as the free match-up not specifying the opponent is performed in that case. Additionally, after the game has finished, when the client does not require a restart of the game for a while, a state not searching the opponent (unregistered) can be possible.

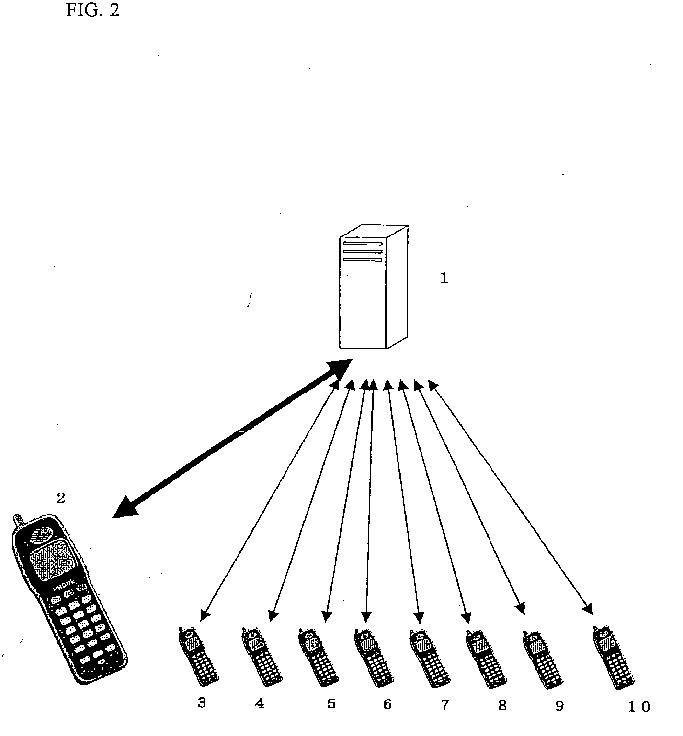

Fig. 2 is a configuration view of a system necessary for executing the invention. In the shown embodiment, a case is assumed in which both the client terminal and the player terminal are mobile telephones and there are eight game stages (game stages during match-up) whose data are transmitted from the server terminal to the client terminal, however, the number of game stages is not limited to the case.

A numeral 1 denotes a server terminal in which an operating program according to the invention is stored, a numeral 2 denotes a client terminal belonging to the client which receives multiple game stages, numerals 3 to 10 denote player terminals belonging to opponents playing matches at multiple game stages which are given to the client terminal. The server terminal 1, the client terminal 2 and the player terminals 3 to 10 are connected through a network such as an internet.

### EMBODIMENT

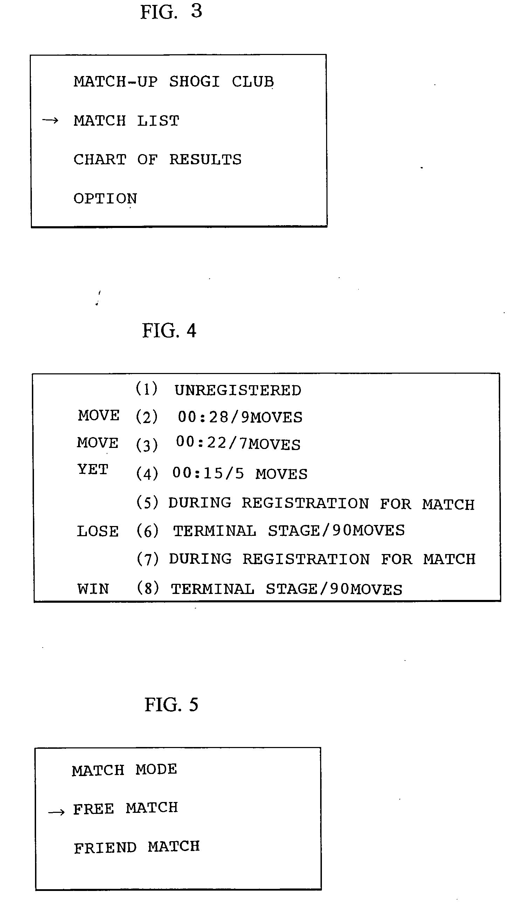

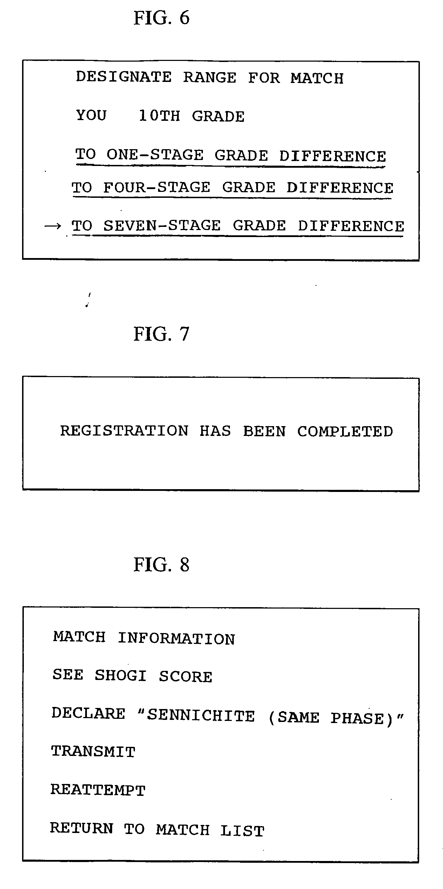

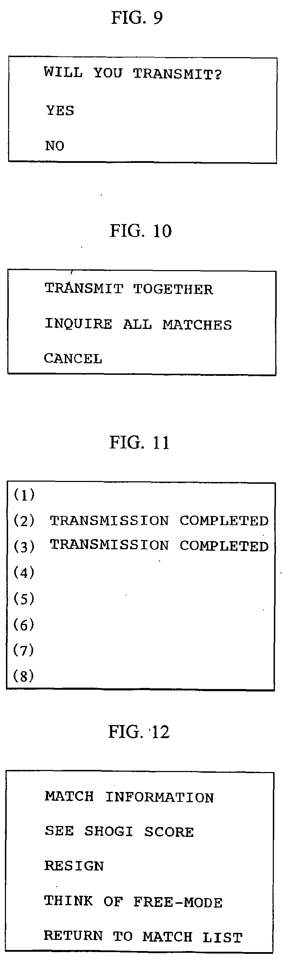

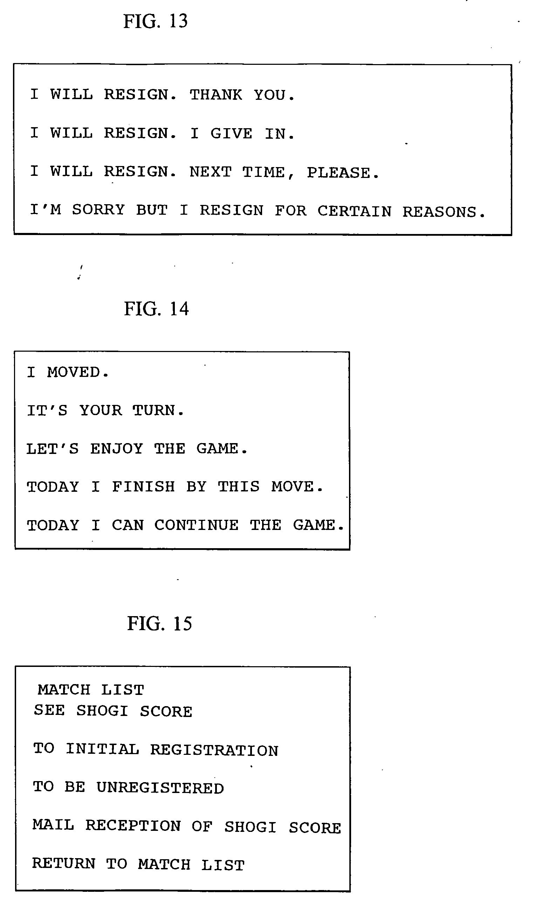

In the embodiment, as described above, a case is assumed in which game stages transmitted from the server terminal 1 to the client terminal 2 by the user registration are eight stages and all stages are same kind of game stages having the content of "shogi". The eight game stages transmitted to the client terminal 2 means that match-up games can be played with player terminals 3 to 10 in each game stage individually and that the same eight game stages are also given to each player terminal similarly to the client terminal. Fig. 3 is an initial page displayed at the client terminal 2, Fig. 4 is a page displayed when "match list" was selected in Fig. 3 or when an match-up opponent was decided, Fig. 5 is a page displayed when "unregistered" was selected in Fig. 4, Fig. 6 is a page displayed when "free match-up" was selected in Fig. 5, Fig. 7 is a page notifying a registration for the match-up opponent, Fig. 8 is a page displaying menus for a next stage (board face) during the game, Fig. 9 is a page displayed when "transmit" was selected in Fig. 8 or "transmit together" was selected in Fig. 10, Fig. 10 is a page which is called after multiple games are proceeded within Fig. 4, Fig. 11 is a page displayed when "transmit together" was selected in Fig. 10, Fig. 12 is a page which can be called in a state that a player terminal has moved and a client terminal has a turn during the game and the page for proceeding to a next stage (board face), Fig. 13 is a selection page of messages to be sent to the match-up opponent when "resign" was selected in Fig. 12, Fig. 14 is a selection page of messages to be sent to the match-up opponent during the game and Fig. 15 is a page displayed when the game ends. Hereinafter, a procedure in the case that the client terminal 2 performs the match-up game with the player terminal 3 among the plural player terminals will be explained.

First, in Fig. 1 and Fig. 2, in order to allow the client terminal 2 to play the game, it is necessary to perform a user registration between the client terminal 2 and the server terminal 1 (S103) and receive multiple game stages (eight stages in the embodiment) from the server terminal 1 (S104). As a condition under which the match-up game is performed with the player terminal 3, the player terminal 3 is in a state that the user registration has previously performed (S101) and that multiple game stages (eight stages in the embodiment) are given from the server terminal 1 (S102). Under the circumstances, when condition required of the match-up opponent is transmitted from the player terminal 3 to the server terminal 1 (S105), the server terminal performs a processing of transmitting a match-up reception indicating the reception of the opponent request to the player terminal 3 (S106) and waits until a match-up opponent who satisfies the condition makes an application for the match-up. The "opponent request" in the drawing corresponds to an "opponent condition" as referred to in the invention.

Hereupon, when the opponent request as the condition required of the match-up opponent is notified from the client terminal 2 (S107), the server terminal performs a processing of transmitting a match-up reception indicating the reception of the opponent request to the client terminal (S108) in the same way as the above and waits until a match-up opponent who satisfies the condition makes a application for the match-up. The server terminal 1 refers the opponent request and the opponent request notified by the player terminal 3 and when both required conditions match with each other, the server terminal 1 notifies the start of the match-up to both the client terminal 2 and the player terminal 3 (S109).

Specifically, after the client terminal 2 went through the user registration (S103), multiple game stages are given from the server terminal 1 (S104), at the same time, the initiation screen of Fig. 3 is displayed at the client terminal 2. When an item of "match list" is selected, the screen moves to the page of Fig. 4 and conditions of eight game stages are simply displayed, therefore, an item of "unregistered" is selected. Then, the screen moves to the page of Fig. 5, where the opponent condition required for the match-up opponent is selected from them (S107). As the opponent condition, there are a free match-up which does not specify the opponent, a friend match-up which specifies the opponent, a level designation which specifies the level and so on, in the embodiment, the opponent condition in which the free match-up and the level designation are combined is applied. In Fig. 4, some stages are in a state in which the match-up games have been already proceeded with, or some stages are in a state during a match-up registration except the game stage (1), however, at the time just after the client terminal 2 has been registered as a user, all the game stages of (1) to (8) are in the state of "unregistered".

In the embodiment in which the free match-up is combined with the level designation, when "free match-up" is selected in the page of Fig. 5, the page moves to the page of Fig. 6, where the level required of the match-up opponent is selected, then, when one of "to one-stage, grade difference" "to four-stage grade difference" "to seven-stage grade difference" in the drawing is selected, the page moves to the page of Fig. 7, which indicates that the registration of the match-up opponent is completed. After the registration of the match-up opponent has been completed, the letters of "during registration for match" are displayed such as (5) and (7) in the match list of Fig. 4, and the client terminal will wait until the match-up opponent who satisfy the condition appears(S108).

Accordingly, when the opponent condition is selected by the client terminal 2 and it is "during registration for match", the server terminal 1 refers player terminals in the state of waiting (during registration for match), who have already selected the opponent condition, and performs a search processing whether they match the condition of the client terminal 2. As a result, when it is cleared that the condition matches the opponent condition of the player terminal 3, the start of the match-up is notified both to the client terminal 2 and the player terminal 3 (S109), and the match-up game starts at last. In the embodiment, since the client terminal 2 has selected "to seven-stage grade difference", the player terminal 3 specified as the match-up opponent by the search of the server terminal 1 is a user having such level.

As described above, in the applied invention, the server terminal 1 refers the opponent condition selected by the client terminal 2 and the opponent conditions of the player terminals who are already in waiting (during registration for match), and when the conditions match each other, the server terminal 1 assigns the match-up opponent automatically. Further, the server terminal 1 performs a processing for preventing the same match-up opponent from being chosen redundantly by checking whether a person to be the match-up opponent is the person playing in another game stage.

Consequently, the match-up opponent has been decided and the game starts, the client terminal 2 or the player terminal 3 as the match-up opponent takes the first move. In the case that the client terminal 2 takes the first move, a mark of "move" is displayed as in (2) and (3) in the match list of Fig. 4, and in the case that the player terminal 3 takes the first move, a mark of "yet" is displayed as in (4) of the match list of Fig. 4. When taking a move (when proceeding with the game), by selecting a desired game stage from the game stages of (1) to (8) in the match list of Fig. 4, an actual game stage is displayed, then, the game proceeds there. After the client terminal 2 takes a move, the screen moves to the page of Fig. 8, where selection items such as a transmission of the taken move and taking a move again are displayed. Then, if the taken move has no problem, "transmit" in Fig. 8 is selected to move to the page of Fig. 14. When one of them is selected, the screen moves to the page of Fig. 9. Here, by selecting "YES", the taken move is transmitted to the server terminal 1 as game data (S111). The transmitted game data is reflected by updating the game stage at the server terminal 1 (S113), which is displayed so as to be seen by the player terminal which belongs to the match-up opponent (S112).

When transmitting game data, by selecting "return to match list" without selecting "transmit" in the page of Fig. 8, it becomes possible that the client terminal 2 moves to the page of Fig. 4 again and takes a move in another game stage and game data can be transmitted together. For example, as shown in Fig. 4, the mark of "move" is put in the game stages of (2) and (3) where the move has been taken, and by calling the page of Fig. 10 and selecting "transmit together" there, the screen moves to the page of Fig. 9. Consequently, game data in multiple game stages can be transmitted together. As a result, communication costs and packet costs can be reduced a lot as compared with the case of transmitting game data by each game stage individually. When "transmit together" in Fig. 10 is selected, the screen moves to the page of Fig. 9 (the server terminal 1 calls the screen of Fig. 9), then, by selecting "YES" at the page, game data is transmitted together to the server terminal 1. Accordingly, after the game data is transmitted, the screen moves to the page of Fig. 11, and "transmission completed" is displayed in the sections of the game stages (2) and (3) where the game data has been transmitted.

When the game data is transmitted from the client terminal 2 (S111) and the game screen is updated in the server terminal 1 (S113), the updated screen is transmitted to the player terminal 3 (S112), the "yet" mark is put at the game stage during the match-up with the client terminal 2 in the match list of the player terminal 3, therefore, the player terminal 3 takes a move this time, and transmit the game data thereof to the server terminal 1 in the same way as described above (S114). Also in the case, the processing that prompts the selection of the transmission method is performed by the server terminal 1, therefore, the player terminal 3 can take moves also at the game stage other than the stage during the match-up with the client terminal 2 and the game data thereof can be transmitted together to the server terminal 1. The game screen is updated based on the game data transmitted by the player terminal 3 (S116), and the updated screen is also transmitted to the client terminal 2 (S115).

In the embodiment, in the game stage to which the "yet" mark in Fig. 4 is put, which indicates the state in which the match-up opponent has taken a move but the client terminal 2 has not taken a move yet, in the case that there is no point in proceeding with the play because the defeat is apparent or because of other reasons, the game can be finished unilaterally and forcibly. Specifically, after the game stage to which the "yet" mark is put in the match list in Fig. 4 is selected, the page of Fig. 12 can be called, then, by selecting "resign" at the page, the game can be finished unilaterally and forcibly. At that time, messages concerning the resignation as shown in Fig. 13 can be selected and transmitted so as not to be rude to the match-up opponent. In addition, messages as shown in Fig. 14 can be selected and transmitted to the match-up opponent during the game.

Thus, when the client terminal 2 and the player terminal 3 proceed with the game sequentially, and the game ends at last, or the game has been finished unilaterally and forcibly, the client terminal 2 returns to the steps at which the client terminal 2 selects the opponent request (opponent condition) (S107) and at which the server terminal 1 chooses and decides the match-up opponent. The player terminal 3 also returns to the steps at which the player terminal 3 selects the opponent request (opponent condition) (S105) and the server terminal 1 chooses and decides the match-up opponent, then the same processing as described above will be repeated. Specifically, the screen moves to the page of Fig. 15 by the end of the game, and when the client terminal 2 wants to play a game immediately, the client terminal 2 returns to the step of S107 and the player terminal 3 returns to the step of S105 by selecting "to initial registration" in the page of Fig. 15, therefore, the same processing as described above will be repeated from that step. When selecting "return to the match list" and moving to the page of Fig. 4, an indication of "terminal stage" as in (6) and (8) is displayed at the game stages where the game has finished. Additionally, in the case that the client terminal 2 does not want to play a game for some time after the game has finished, by selecting "to be unregistered" in the page of Fig. 15, an indication of "unregistered" as in the game stage (1) is displayed at the match list of Fig. 4.

The conventional match-up game is either a "one game/one-to-one" type or a "one game/one-to-many" type, however, by means of an operating program of a multiple match-up type network game according to the invention, it can be possible to provide a "multiple games/one-to-one" type and a "multiple games/one-to-many" type match-up games. As a result, in the match-up in one game stage, if there is the difference in a point such as proceeding speed or a level of skill, the plays are allowed to proceed in games at other game stages, therefore, one can enjoy the game without feeling the stress. In addition, by making multiple game stages for the same kind of game, or making them for different kinds of games, match-up games having a variety of contents can be performed. And the match-up opponent is assigned automatically only by choosing the opponent condition, and the match-up opponent to be selected is searched and selected so as not to overlap with the match-up opponent who is playing in another game stage, therefore, the matching with the match-up opponent can be easily performed. Furthermore, the batch transmission of game data allows the communication costs and packet costs to be saved.

## Claims

1. A method of operating a server terminal in a network in order to operate a multiple match-up type network game, the network including a client terminal and player terminals, and the server terminal being capable of transmitting and receiving game data to and from the client terminal, the method comprising:
receiving data for requesting a game from the client terminal,
transmitting multiple game stages to the client terminal in response to the data received,
selecting a match-up opponent corresponding to an opponent condition for each game stage based on opponent data transmitted by the client terminal, and
monitoring match-up games at respective game stages and receiving game data executed at the client terminal and at the player terminals belonging to match-up opponents, and updating and transmitting screens at the respective game stages based on the game data.

2. A method as claimed in claim 1, wherein the multiple game stages are the multiple game stages whose contents are for the same kind of game.

3. A method as claimed in claim 1, wherein the multiple game stages are the multiple game stages whose contents are for different kinds of game.

4. A method as claimed in claim 1, 2 or 3, wherein the step of updating and transmitting screens at respective game stages includes a process of prompting for a choice whether game data received from the client terminal is transmitted as batch game data executed at multiple game stages or not.

5. A method as claimed in any preceding claim, wherein the opponent condition includes as a possible choice at least one of a free match-up not specifying the opponent, a friend match-up specifying the opponent and a level designation considering the ability of the opponent.

6. A method as claimed in claim 5, wherein in the case of the free match-up, the step of selecting the match-up opponent includes sorting the match-up opponents so that the same match-up opponent is not selected redundantly by openly notifying a match-up request and by checking the match-up opponents playing at other game stages.

7. A method as claimed in claim 5, wherein in the case of the friend match-up, the step of selecting the match-up opponent includes searching and specifying a friend to be the match-up opponent from a plurality of friends so that the same match-up opponent is not selected redundantly by checking the match-up opponents playing at other game stages and notifying a match-up request to a player terminal which belongs to the specified match-up opponent.

8. A method as claimed in claim 5, wherein in the case of the level designation, the step of selecting a match-up opponent includes searching and specifying the match-up opponent corresponding to the designated level so that the same match-up opponent is not redundantly selected by checking the match-up opponents playing at other game stages and notifying a match-up request to a player terminal which belongs to the specified match-up opponent.

9. A method as claimed in claim 5, wherein in the case of a combination of the free match-up and the level designation, the step of selecting includes sorting the match-up opponents so that the same match-up opponent is not selected redundantly by openly notifying a match-up request and by checking the match-up opponents playing at other game stages, and checking whether the unspecified person to be the match-up opponent is in a designated level.

10. A method of operating a multiple match-up type network game over a network, the network including a server terminal, a client terminal and player terminals, and the server terminal being capable of transmitting and receiving game data to and from the client terminal, the method comprising:
transmitting from the client terminal data for requesting a game,
receiving at the server terminal the data for requesting a game from the client terminal,
transmitting multiple game stages from the server terminal to the client terminal in response to the data received,
selecting at the server terminal a match-up opponent corresponding to an opponent condition for each game stage based on opponent data transmitted by the client terminal, and
monitoring at the server terminal match-up games at respective game stages and receiving game data executed at the client terminal and at the player terminals belonging to match-up opponents, and updating and transmitting screens at the respective game stages based on the game data.

11. A data processing apparatus for use in a network in order to operate a multiple match-up type network game, the data processing apparatus including a server terminal, a client terminal and player terminals in the network, wherein:
the server terminal is configured for transmitting and receiving game data to and from the client terminal,
the client terminal is configured for transmitting to the server terminal data for requesting a game,
in response to data requesting a game received from the client terminal the server terminal is arranged to transmit multiple game stages to the client terminal based on the data received,
the server terminal is arranged to process opponent data transmitted by the client terminal in order to select a match-up opponent corresponding to an opponent condition for each game stage, and
the server terminal is capable of monitoring match-up games at respective game stages and receiving game data executed at the client terminal and at the player terminals belonging to match-up opponents, then updating and transmitting screens at the respective game stages.

12. A server terminal for use in a network in order to operate a multiple match-up type network game, the network including a client terminal and player terminals, wherein:
the server terminal is capable of transmitting and receiving game data to and from the client terminal,
in response to data requesting a game received from the client terminal the server terminal is arranged to transmit multiple game stages to the client terminal based on the data received,
the server terminal is arranged to process opponent data transmitted by the client terminal in order to select a match-up opponent corresponding to an opponent condition for each game stage, and
the server terminal is capable of monitoring match-up games at respective game stages and receiving game data executed at the client terminal and at the player terminals belonging to match-up opponents, then updating and transmitting screens at the respective game stages.

13. A computer program product containing instructions that when installed on a server terminal in a network will cause the server terminal to be configured so as to operate a multiple match-up type network game in accordance with the method of any of claims 1 to 10.

14. An operating program of a multiple match-up type network game which operates a server terminal capable of transmitting and receiving game data to and from a client terminal playing a game through a network, and performing a processing of the game based on data transmitted by the client terminal, **characterized by** comprising:
a processing of transmitting and giving multiple game stages to the client terminal by receiving data for requesting a game from the client terminal,
a processing of choosing and deciding a match-up opponent corresponding to an opponent condition by each game stage based on data of the opponent condition transmitted by the client terminal, and
a processing of updating and reflecting screens at respective game stages based on game data by observing match-up games at respective game stages and receiving game data executed at the client terminal and player terminals which belong to match up opponents.
